Europäisches Patentamt

European Patent Office

Office européen des brevets

(11) Publication number: 0 314 442
A2

# EUROPEAN PATENT APPLICATION

(21) Application number: 88310038.0

(22) Date of filing: 26.10.88

(51) Int. Cl.⁴: **B 29 D 31/00**
**B 29 C 67/22**

(30) Priority: 28.10.87 GB 8725247
23.11.87 GB 8727405

(43) Date of publication of application:
03.05.89 Bulletin 89/18

(84) Designated Contracting States:
AT BE CH DE ES FR GB GR IT LI LU NL SE

(71) Applicant: WILSDON & CO. LTD
Industrial Trading Estate Lodge Lane
Solihull West Midlands, B91 2JR (GB)

(72) Inventor: Taggart, Andrew Lowe Cameron
85 Monastery Drive
Olton Solihull, B91 1DP (GB)

(74) Representative: Wain, Christopher Paul et al
A.A. THORNTON & CO. Northumberland House 303-306
High Holborn
London WC1V 7LE (GB)

(54) Composite panel core.

(57) A method of manufacturing a panel core comprisES the steps of placing in a mould (5) a matrix comprising a plurality of sheet material members (1) arranged with the sheet material extending upwardly from the base of the mould, the matrix substantially filling the entire area of the mould. A predetermined quantity of foamable plastics material is placed in the base of the mould and foamed up substantially to fill the spaces between the members. A panel core made by the method comprises a matrix of a plurality of sheet material members (1) arranged with the sheet material having one edge substantially at one major face of the core and the other edge substantially at the other major face of the core, and a foamed plastics material substantially filling the spaces (2) between the members.

FIG. 3.

## Description

## COMPOSITE PANEL CORE

The present invention relates to a composite panel core, a method for producing such a core, and a panel incorporating the core.

Panels embodying the invention find utility in constructing the bodies of lorries and other vehicles, especially cargo carrying vehicles, but can also be used in the construction industry and other areas, such as for military purposes. When used in vehicles, such panels should be light so as not to detract from the weight of cargo that may be carried by the vehicle, and also sufficiently strong to withstand the inevitable knocks and stresses imposed by forces inside and outside the vehicle. Conventional panels may be of a plywood laminate faced on both surfaces with glass fibre reinforced plastics skin. Such panels however suffer from disadvantages in that they are heavy, and, having a poor weight to strength ratio, have a poor resistance to bending. Furthermore, when damaged, the plywood absorbs water and delamination thereof can occur.

Another known type of core comprises an edgewise honeycomb. This however is very expensive and difficult to obtain.

Another known type of panel comprises aluminium sheet. This is acceptable for small areas of panelling, but has little resistance to bending over large areas.

It is an object of the present invention to provide a panel and panel core which is structurally acceptable, of light weight, and which does not absorb water to any great extent.

According to the present invention there is provided a method of manufacturing a panel core comprising the steps of placing in a mould a matrix comprising a plurality of sheet material members arranged with the sheet material extending upwardly from the base of the mould, the matrix substantially filling the entire area of the mould, placing a predetermined quantity of foamable plastics material in the mould and causing or allowing the plastics material to foam up substantially to fill the spaces between the members.

Preferably, the core so manufactured is sliced into two or more cores along one or more planes generally transverse to the matrix. In this way, cores of desired thickness may be produced in a single sized mould and with a standard matrix thickness.

The invention also includes a panel core comprising a matrix of a plurality of sheet material members arranged with the sheet material having one edge substantially at one major face of the core and the other edge substantially at the other major face of the core, and a foamed plastics material substantially filling the spaces between the members.

The matrix may comprise two sets of sheets preferably intersecting substantially at right angles.

The sheet material is advantageously of a paper derivative such as corrugated cardboard or similar light material.

The sheets may be spaced evenly one from the next across the core.

The plastics material is preferably foamed polyurethane, optionally of high density.

The faces of the core may be covered with a skin layer, for example of steel, aluminium, glass fibre reinforced plastics, or plywood, to form a panel.

Embodiments of the present invention will now be more particularly described by way of example and with references to the accompanying drawings, in which:

FIGURE 1 shows schematically a method of producing a core embodying the invention;

FIGURE 2 is a diagrammatic plan view of a panel embodying the invention;

FIGURE 3 is a diagrammatic view of a matrix used in the core.

FIGURE 4 is a diagrammatic view of an alternative matrix used in the core;

FIGURE 5 is a graph showing results of comparative bending tests on various materials including a panel embodying the present invention;

FIGURE 6 is a graph showing the results of a heat transmission test;

FIGURE 7 is a graph showing the results of tests for load/deflection for equal weight panels; and

FIGURE 8 is a graph showing the results of a moisture absorption test.

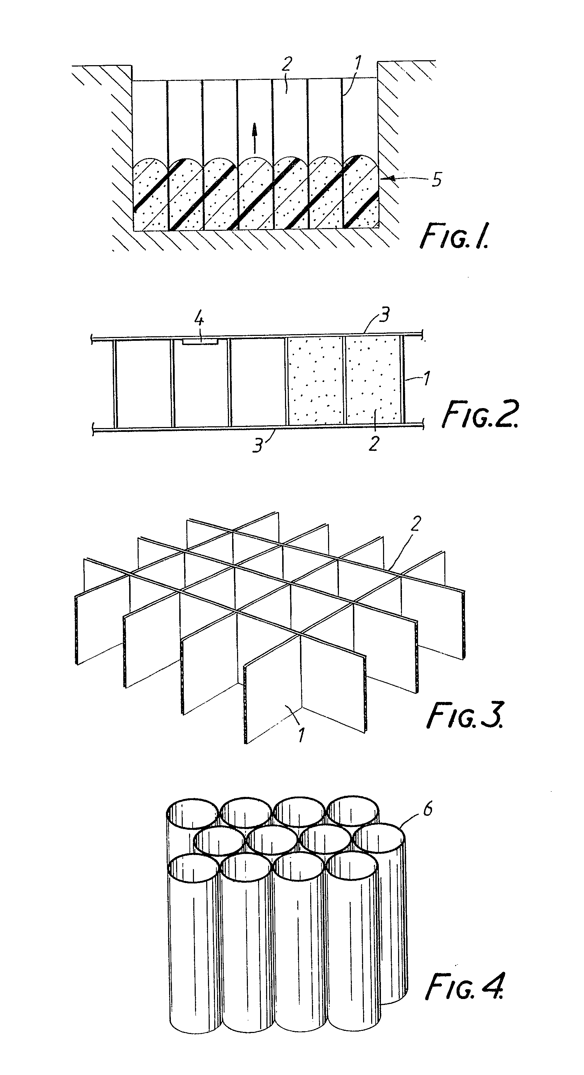

Referring now to Figure 3, the core comprises a matrix of intersecting sheets of corrugated cardboard 1. The sheets are laid on edge at regularly spaced intervals and intersect at consistent geometric angles (shown in the Figures as right angles) to form a plurality of open ended "boxes" 2. In fact, due to the method of manufacture, the sheets 1 may not be continuous along their length. This construction is adapted to be strong in compression but weak in shear, due to buckling of the sheets. Resistance to shear can be increased dramatically if the sheets can be supported over their entire width.

Continuous support is achieved in the present invention by filling each box 2 with polyurethane foam, which can be of high density. This material has a high resistance to shear, although it cannot easily be used as a panel core itself as it has a low resistance to bending.

Thus, it can be seen that the composite material has high resistance to bending imparted by the corrugated cardboard matrix due to its resistance to buckling and high resistance to shear imparted by the polyurethane foam.

Referring now to Figure 2, the core is provided with a laminated skin 3 on both faces. Before laminating, load restraint strengtheners 4 may be incorporated within the core.

In Figure 4 there can be seen an alternative form of matrix where the sheets each take the form of a cylinder or tube 6 of cardboard or the like. They may be held in a close packed array during the manufacturing process by means of staples or clips joining them at opposite ends. The spaces within and between the tubes 6 are filled with polyurethane foam.

Figure 1 shows a method of producing a core. A matrix of sheets 1 is constructed and placed in a correspondingly dimensioned mould 5 together with a predetermined quantity of a polyurethane prepolymer. The prepolymer is than caused or allowed to foam and expand in volume. It therefore fills up the boxes, and the quantity of prepolymer is so chosen that the upper surface of the final foam is substantially level with the top of the matrix.

The core so formed may be removed from the mould, sliced to the desired thickness and optionally cut to the desired size. Skins of e.g. glass fibre reinforced plastics material may be laminated thereto. Load restraints 4 may be incorporated for lamination as and where desired.

Preferably the mould produces a bun about 24 inches (610 mm) thick, and this is sliced horizontally into individual cores. Once the polyurethane has set, it bonds the surfaces of the matrix, allowing the matrix to be sliced at any desired thickness, whether or not the sheets of the matrix are adhered or affixed to each other in that slice. The spacing between the sheets of the matrix in this embodiment is not critical but spacings between 50mm and 150 mm are preferred.

The cardboard used for the matrix is preferably corrugated cardboard of flute size between 2mm and 3mm with a good surface finish, e.g. Kraft or Test board. Such a finish assists the polymer to rise during foaming so that the "boxes" are filled better.

Where a glass fibre reinforced plastics skin is laminated to the face or faces of the core, it has been found preferable to attach it using a resin adhesive such as polyester.

As stated above, the composite core is strong in both shear and bending, and is lightweight. Furthermore, it does not absorb water. One advantage over plywood panels is that it does not absorb water to anything like the same degree. In a plywood panel, once the outer skin is damaged, water will enter and if not repaired immediately, there may be considerable water spread damage. Furthermore shock waves may travel some distance in ply whereby impact damage is not localised. The composite core of the invention has much better attenuation characteristics. Finally, repair of any damage is much easier than with a ply core. To repair damaged ply, a damaged section must be cut out, preferably with mitred edges, and a replacement section inserted. For the composite core it is merely necessary to fill the damaged area with a foamable plastics material and finish off with a car body filler. It may be advisable first to undercut beneath the skin around the damaged area so that the repair remains firmly in place.

The core may be used for panels of dry freight vehicles, when it may be approximately 12-14mm thick. Clearly, different thicknesses can be produced easily. For example, thicker cores, e.g. 100mm thick, may be made for use in insulated vehicles.

As well as use in vehicles, the panel cores may find ready utility in prefabricated buildings or in similar structures. For example, they may comprise the walls of modules for communications equipment, fixed cold stores or have utilisation in the field of military equipment.

The various properties of the core material and panels utilising it will be appreciated from the results of tests conducted on the material and on other panels or panel core materials.

Comparative weights

Composite panels of various thicknesses and also plywood panels of various thicknesses were weighed to find the weight per unit area of each.

In all the tests the composite core comprises corrugated cardboard square matrix at 90 mm spacing and the polyurethane foam used in the composite panel had an approximate density of 30 kg/m³.

The results are given in the Table below.

EP 0 314 442 A2

| Thickness (mm) | Weight of Composite panel (kg/m$^2$) | Weight of plywood panel (kg/m$^2$) | Ratio of weights |
|---|---|---|---|
| 10.5 | 4.0 | 8.14 | 0.5 |
| 14.0 | 4.15 | 10.6 | 0.38 |
| 15.0 | 4.2 | 11.4 | 0.36 |
| 16.0 | 4.25 | 12.0 | 0.34 |
| 17.0 | 4.3 | 12.8 | 0.32 |
| 18.0 | 4.35 | 13.5 | 0.31 |
| 20.0 | 4.45 | 15.0 | 0.28 |
| 24.0 | 4.65 | 18.6 | 0.25 |

As may be seen, the composite panel was between one half and one quarter of the weight of the ply panel, depending on thickness.

## Bending Test

Panels of various materials and thicknesses were prepared of dimensions 1500 mm x 760 mm. In the tests they were supported to have a 1200 mm span and a load was applied at the centre over an area of diameter 200 mm.

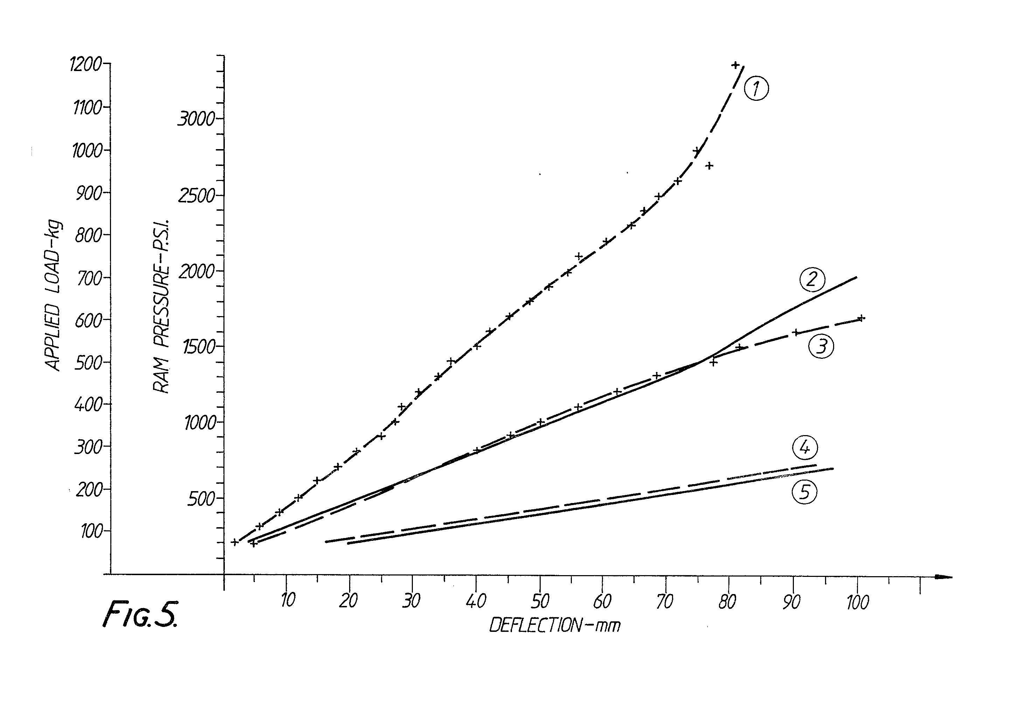

The results of deflection (mm) against applied load (kg) are shown graphically in Figure 5, in which:

Curve 1 is a 17.5 mm plywood/GRP panel;
Curve 2 is a 18.0 mm composite/GRP panel;
Curve 3 is a 14.5 mm plywood/GRP panel;
Curve 4 is a 10.5 mm plywood/GRP panel; and
Curve 5 is a 18.0 mm p.u. foam only/GRP panel.

As can be seen, an 18.0 mm composite panel is broadly similar to a 14.5 mm plywood panel in terms of resistance to bending.

## Lateral Pull Test

Test vehicle bodies were made up of 11 mm plywood/GRP panels and of 18 mm composite/GRP panels, in each case spaced approximately 2426 mm apart. Simultaneous inward forces were applied to both panels by means of a ram and pivoted lever arrangement.

Results for each body of ram pressure against total deflection are given in the Table below.

| Ram pressure | | 18mm Composite panels | | 11mm plywood panels | |
|---|---|---|---|---|---|
| Psi | kg | separation mm | deflection mm | separation mm | deflection mm |
| 0 | 0 | 2411 | – | 2436 | – |
| 100 | 35 | 2408 | 3 | 2427 | 9 |
| 200 | 72 | 2404 | 7 | 2418 | 18 |
| 300 | 107 | 2395 | 16 | 2410 | 26 |
| 400 | 143 | 2386 | 25 | 2403 | 33 |
| 500 | 180 | 2380 | 31 | 2396 | 40 |

4

## Load/Deflection Test

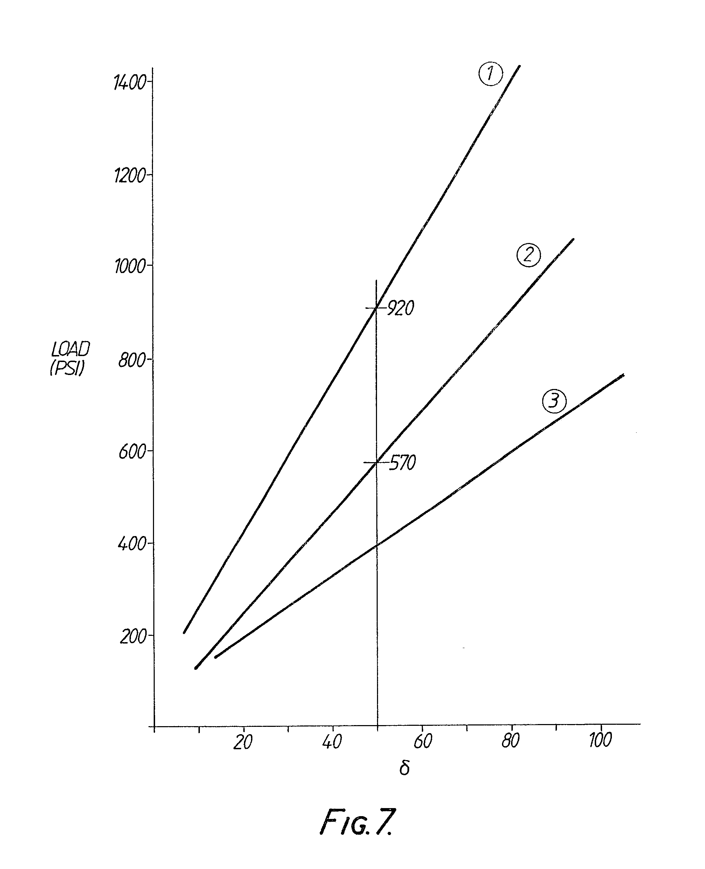

The preceding test was repeated on three panels of equal weight (based on that of an 18mm composite panel), one composite, one plywood and one polyurethane foam only. The results are shown graphically in Figure 7 where:
    Curve 1 is composite material;
    Curve 2 is plywood; and
    Curve 3 is foam alone.
    As may be seen, the strength/weight ratio between composite material and plywood is approximately 1.6.

## Heat Transmission Test

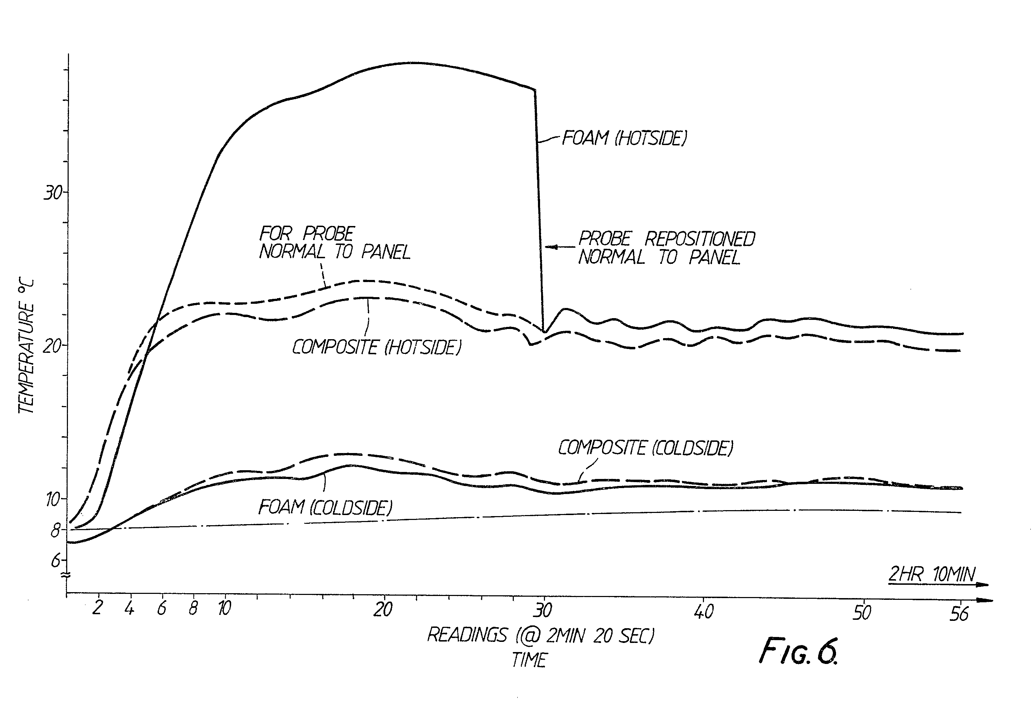

Panels of composite material/GRP and of polyurethane foam/GRP of equal thickness were subjected to heat on one side from a battery of lamps. A temperature probe measured the temperature on each side of the panel. (The hotside probe was repositioned during the test on the foam only panel and this affected the readings.)
    The results are shown graphically in Figure 6.
    As can be seen, the presence of the cardboard matrix does not significantly increase the heat transmission characteristics.

## Moisture Absorbtion Test

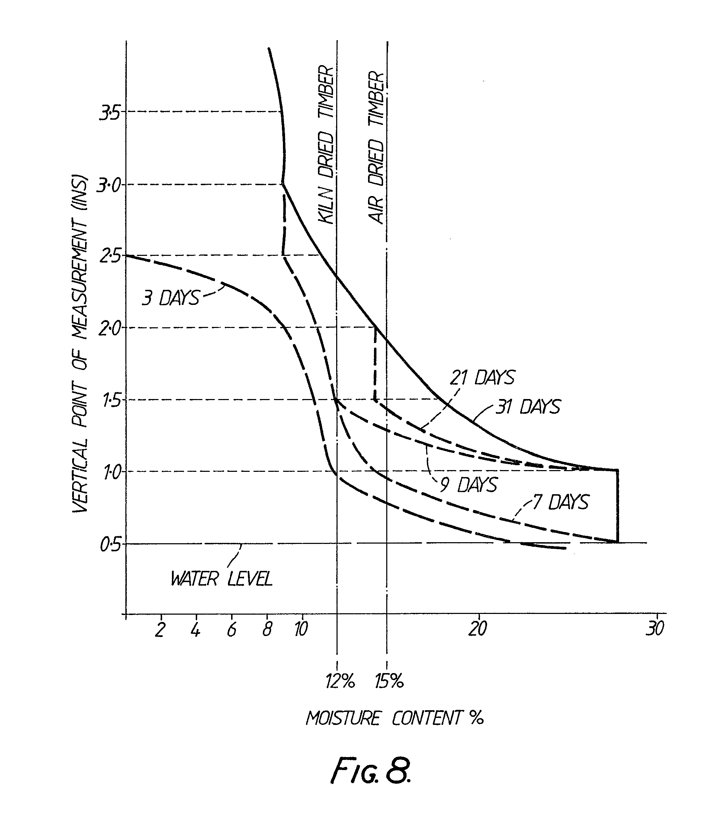

A block of composite core material was placed in a tray of water initially $\frac{1}{2}$ inch (12.7 mm) deep. Every few days, readings of moisture content were taken at vertically spaced points of a vertical cardboard matrix member. The results are shown graphically in Figure 8, where for comparison figures of moisture content for air dried and kiln dried timber are also indicated.
    As can be seen the water penetration was such that the level of moisture exceeded that of normal timber only to a distance from the water $\frac{1}{2}$ inch (12.7 mm) after 7 days, 1 inch (25.4 mm) after 21 days and $1\frac{1}{2}$ inches (38.1 mm) after 31 days.

## Heat Delamination Test

A panel of composite core material laminated to GRP skin by resin/glass adhesive was subjected to intermittent heating. The temperature at the hot side of the panel varied between 65°C and 15°C. Heating periods and cooling periods each of approx. 1 hour 20 minutes were carried out continuously over an extended period of several months.
    The skin remained firmly attached to the core, with no blistering.

## Impact Resistance Test

A 10kg weight was dropped from a height of 1600 mm onto various panels comprising a GRP skin laminated to a core.
    In a first series of tests the panel was laid flat on a hard surface, and in the second the panel was supported near the edges and the impact area was therefore free to flex slightly.

EP 0 314 442 A2

| | Panel Type | Comment |
|---|---|---|
| 1st series | 14.5 mm plywood | skin cracked and indented |
| | 18 mm composite | skin cracked and indented |
| | 22 mm composite | skin cracked and indented |
| | 18mm dense foam composite | no cracks slight indentation |
| 2nd series | 14.5 mm plywood | small hairline cracks – no indentation |
| | 18 mm composite | no cracks, no visible damage |
| | 22 mm composite | no cracks, no visible damage |
| | 18 mm dense foam composite | no cracks, no visible damage. |

**Claims**

1. A method of manufacturing a panel core characterised in that it comprises the steps of placing in a mould (5) a matrix comprising a plurality of sheet material members (1) arranged with the sheet material extending upwardly from the base of the mould, the matrix substantially filling the entire area of the mould, placing a predetermined quantity of foamable plastics material in the mould and causing or allowing the plastics material to foam up substantially to fill the spaces between the members.

2. A method according to claim 1, characterised in that the sheet material members (1) comprise cardboard, preferably corrugated cardboard, or plastics sheet material.

3. A method according to claim 1 or claim 2, characterised in that the foamable plastics material is an isocyanate prepolymer of foamed polyurethane, preferably adapted to form a polyurethane of density in the region of 30 kg/m$^3$.

4. A method according to any one of the preceding claims, characterised in that the plurality of sheet material members comprise two sets of sheets, the sheets of each set being arranged substantially parallel and spaced one from the next, and the sets being arranged transverse one to the other, preferably intersecting substantially as right angles.

5. A method according to claim 4, characterised in that the sheets of each set are spaced substantially equidistantly one from the next, preferably by a distance between 50 and 150 mm.

6. A method according to any one of claims 1 to 3, characterised in that each of the plurality of sheet material members comprises a hollow cylinder (6) of sheet material, each cylinder being adjacent to others to form a close packed array thereof.

7. A method according to any one of the preceding claims, characterised by the additional step of slicing the core formed by the method along at least one plane transverse to the matrix, preferably to form a plurality of panel cores of thickness between approximately 10 mm and 25 mm.

8. A method according to claim 7, characterised by the further step of covering the panel core with a skin layer (3) preferably of glass fibre reinforced plastics material on at least one face thereof, the layer being adhered by means of a chopped glass/resin adhesive mixture.

9. A panel core characterised in that it comprises a matrix of a plurality of sheet material members (1) arranged with the sheet material having one edge substantially at one major face of the core and the other edge substantially at the other major face of the core, and a foamed plastics material substantially filling the spaces (2) between the members.

10. A panel core according to claim 9, characterised in that the sheet material member (1) comprise cardboard, preferably corrugated cardboard or plastics sheet material.

6

FIG. 1.

FIG. 2.

FIG. 3.

FIG. 4.

Fig.5.

FIG. 6.

EP 0 314 442 A2

FIG.7.

FIG. 8.